# EUROPEAN PATENT APPLICATION

(11) **EP 4 596 594 A1**
(43) Date of publication of application: **06.08.2025**
(21) Application number: 23871637.7
(22) Date of filing: 29.08.2023
(51) Int. Cl.: C08G 18/00, C08G 18/10, C08G 18/32, C08G 18/42, C08G 18/66, C08G 18/75, C09D 5/02, C09D 175/06

(54) **AQUEOUS DISPERSION OF POLYURETHANE RESIN, AND WATER-BASED PAINT**

(30) Priority: 30.09.2022 JP 2022158541
(71) Applicant: DKS Co. Ltd., Kyoto-shi, Kyoto 600-8873 (JP)
(72) Inventor: KANEKO Fumiya, Kyoto-shi, Kyoto 6008873 (JP); NISHIMURA Takuma, Kyoto-shi, Kyoto 6008873 (JP); WATANABE Toshiya, Kyoto-shi, Kyoto 6008873 (JP)
(74) Representative: Kuhnen & Wacker Patent- und Rechtsanwaltsbüro PartG mbB
(86) International application number: PCT/JP2023/031074
(87) International publication number: WO 2024/070396

(57) **Abstract**

A reduction in the viscosity is achieved and improvements in the storage stability and the heat resistance of the coating film are achieved.

An aqueous dispersion of a polyurethane resin according to an embodiment is obtained by a reaction of a polyol (A), a polyisocyanate (B), and a chain extender (C). The polyol (A) includes an aromatic polyester polyol (A1), and an aliphatic diol (A2) having a hydrocarbon group in a side chain. The chain extender (C) includes a compound (C1) having three primary and/or secondary amino groups and not having hydroxy groups, and a compound (C2) having one or more hydroxy groups and two or more primary and/or secondary amino groups. The acid value is 11.0 to 23.0 mgKOH/g and the hydroxyl value is 8.0 to 23.0 mgKOH/g.

## Description

### Technical Field

Embodiments of the present invention relate to an aqueous dispersion of a polyurethane resin and an aqueous coating material containing the aqueous dispersion of a polyurethane resin.

### Background Art

Aqueous dispersions of polyurethane resins are widely used for, for example, coating materials, inks, adhesives, and coating agents. For example, Patent Literature 1 discloses, as an aqueous polyurethane emulsion composition having high adhesion to various base material films, an emulsion composition provided by neutralizing, with a neutralizer, a polyurethane resin obtained by a reaction of a polyester polyol, a carboxy group-containing acrylic polyol, a carboxy group-containing polyol, an organic diisocyanate, a chain extender, and a molecular weight control agent. In Patent Literature 1, the polyester polyol employed is obtained by a reaction of an aromatic dicarboxylic acid, an aliphatic dicarboxylic acid, and a side chain alkyl group-containing diol, and the chain extender employed is a combination of a diamine and a triamine.

Patent Literature 2 discloses use of, as an aqueous polyurethane resin added together with a water-soluble acrylic resin in an aqueous coating material composition, a polyurethane having a hydroxy group obtained by a reaction of a polyol having a number-average molecular weight of 500 to 5000, a low-molecular-weight alcohol having at least two hydroxy groups, a compound having at least one primary or secondary amino group, a polyisocyanate compound, and a compound having a carboxy group and an active hydrogen.

### Citation List

### Patent Literature

PTL 1: Japanese Unexamined Patent Application Publication No. 2007-119772
PTL 2: Japanese Unexamined Patent Application Publication No. 2005-89613

### Summary of Invention

### Technical Problem

Aqueous dispersions of polyurethane resins preferably have lower viscosity for the same solid content from the viewpoint of usability and the like, and desirably have storage stability. Coating films formed from the aqueous dispersions desirably have heat resistance depending on the applications. However, existing aqueous dispersions of polyurethane resins are not necessarily satisfactory in terms of the reduction in the viscosity, the storage stability, and the heat resistance.

An object of embodiments of the present invention is to provide an aqueous dispersion of a polyurethane resin in which a reduction in the viscosity can be achieved and improvements in the storage stability and the heat resistance can be achieved.

### Solution to Problem

The present invention includes the following embodiments.
[1] An aqueous dispersion of a polyurethane resin obtained by a reaction of a polyol (A), a polyisocyanate (B), and a chain extender (C),
   wherein the polyol (A) includes an aromatic polyester polyol (A1) and an aliphatic diol (A2) having a hydrocarbon group in a side chain,
   the chain extender (C) includes a compound (C1) having three primary and/or secondary amino groups and not having hydroxy groups, and a compound (C2) having one or more hydroxy groups and two or more primary and/or secondary amino groups, and
   the polyurethane resin has an acid value of 11.0 to 23.0 mgKOH/g and a hydroxyl value of 8.0 to 23.0 mgKOH/g.
[2] The aqueous dispersion of a polyurethane resin according to [1], wherein a mass ratio (C1)/(C2) of the compound (C1) to the compound (C2) is 0.3 to 1.4.
[3] The aqueous dispersion of a polyurethane resin according to [1] or [2], wherein the aliphatic diol (A2) has 3 to 10 carbon atoms.
[4] The aqueous dispersion of a polyurethane resin according to any one of [1] to [3], wherein the polyisocyanate (B) includes an alicyclic polyisocyanate.
[5] The aqueous dispersion of a polyurethane resin according to any one of [1] to [4], wherein an amount of the aromatic polyester polyol (A1) relative to 100 mass% of the polyol (A) is 70 to 90 mass%.
[6] The aqueous dispersion of a polyurethane resin according to any one of [1] to [5], wherein the polyol (A) further includes a carboxy group-containing polyol (A3).
[7] The aqueous dispersion of a polyurethane resin according to any one of [1] to [6], wherein the polyol (A) further includes a trihydric alcohol (A4) having a molecular weight of 350 or less.
[8] An aqueous coating material including the aqueous dispersion of a polyurethane resin according to any one of [1] to [7].

### Advantageous Effects of Invention

Embodiments of the present invention can achieve a reduction in the viscosity of the aqueous dispersion of a polyurethane resin and can achieve improvements in the storage stability and the heat resistance.

### Description of Embodiments

An aqueous dispersion of a polyurethane resin according to an embodiment (hereafter, may be simply referred to as aqueous dispersion) is obtained by a reaction of a polyol (A), a polyisocyanate (B), and a chain extender (C).

### [Polyol (A)]

In the embodiment, the polyol (A) employed is an aromatic polyester polyol (A1) and an aliphatic diol (A2) having a hydrocarbon group in a side chain. The use of the aromatic polyester polyol (A1) can result in an improvement in the storage stability of the aqueous dispersion and an increase in the strength of the coating film, compared with the cases of using aliphatic polyester polyols. The use of the aliphatic diol (A2) having a hydrocarbon group in a side chain can result in a reduction in the viscosity of the aqueous dispersion and an improvement in the storage stability.

### (Aromatic polyester polyol (A1))

The aromatic polyester polyol (A1) employed can be a product of an esterification reaction of a polycarboxylic acid including an aromatic polycarboxylic acid and a polyol.

Examples of the aromatic polycarboxylic acid include orthophthalic acid, isophthalic acid, terephthalic acid, 1,4-naphthalenedicarboxylic acid, 2,3-naphthalenedicarboxylic acid, 2,6-naphthalenedicarboxylic acid, biphenyldicarboxylic acid, trimellitic acid, pyromellitic acid, and anhydrides or ester derivatives of the foregoing. These may be used alone or in combination of two or more thereof. For the polycarboxylic acid constituting the aromatic polyester polyol (A1), as long as an aromatic polycarboxylic acid is included, an aliphatic polycarboxylic acid such as adipic acid, glutaric acid, succinic acid, or an anhydride of the foregoing may be additionally used. The amount of the aromatic polycarboxylic acid relative to 100 parts by mass of the polycarboxylic acid is preferably 50 parts by mass or more, more preferably 55 parts by mass or more, still more preferably 60 parts by mass or more, and may be 65 to 90 parts by mass.

Examples of the polyol that is caused to react with the polycarboxylic acid include aliphatic polyols such as ethylene glycol, diethylene glycol, triethylene glycol, tetraethylene glycol, 1,2-propanediol, 1,3-propanediol, dipropylene glycol, tripropylene glycol, 1,2-butanediol, 1,3-butanediol, 1,4-butanediol, 2,3-butanediol, 1,5-pentanediol, 1,5-hexanediol, 1,6-hexanediol, 2,5-hexanediol, 1,7-heptanediol, 1,8-octanediol, 1,9-nonanediol, 1,10-decanediol, 1,11-undecanediol, 1,12-dodecanediol, 2-methyl-1,3-propanediol, neopentyl glycol, 2-butyl-2-ethyl-1,3-propanediol, 3-methyl-1,5-pentanediol, 2-ethyl-1,3-hexanediol, 2-methyl-1,8-octanediol, glycerol, trimethylolpropane, ditrimethylolpropane, tritrimethylolpropane, and pentaerythritol, alicyclic polyols such as 1,4-cyclohexanedimethanol and hydrogenated bisphenol A, and bisphenol-type polyols such as bisphenol A, alkylene oxide adducts of bisphenol A, bisphenol S, and alkylene oxide adducts of bisphenol S. These may be used alone or in combination of two or more thereof.

The number-average molecular weight (Mn) of the aromatic polyester polyol (A1) is not particularly limited and may be, for example, 500 to 3000, may be 800 to 2500, or may be 1000 to 2000.

In this Description, the number-average molecular weight (Mn) is a value determined by measurement by the GPC method (gel permeation chromatography) and calculation using a calibration curve created using standard polystyrenes. Specifically, the measurement can be performed under GPC conditions of column: "TSKgelG4000HXL + TSKgel G3000HXL + TSKgel G2000HXL + TSKgel G1000HXL + TSKgel G1000HXL" manufactured by Tosoh Corporation, mobile phase: THF (tetrahydrofuran), mobile phase flow rate: 1.0 mL/min, column temperature: 40°C, sample injection amount: 50 µL, and sample concentration: 0.2 mass%.

### (Aliphatic diol (A2) having hydrocarbon group in side chain)

In the aliphatic diol (A2) having a hydrocarbon group in a side chain, the side chain refers to a hydrocarbon group branched from a main chain defined as a carbon chain linking two hydroxy groups together. The hydrocarbon group in the side chain may be saturated or unsaturated, and is preferably an alkyl group. The aliphatic diol (A2) may be saturated or unsaturated, and is preferably a saturated aliphatic diol (A2). The number of such side chains branched from the main chain is not particularly limited and may be, for example, 1 to 3, or 1 to 2. The number of carbon atoms of such a side chain is not particularly limited; for example, the total number of carbon atoms of such side chains may be 1 to 8, or 1 to 6.

Specific examples of the aliphatic diol (A2) include 1,2-propanediol, 1,2-butanediol, 1,3-butanediol, 2,3-butanediol, 1,5-hexanediol, 2,5-hexanediol, 2-methyl-1,3-propanediol, 2,2-dimethyl-1,3-propanediol (synonym: neopentyl glycol), 2-ethyl-1,3-propanediol, 2-butyl-2-ethyl-1,3-propanediol, 2,4-dimethyl-2-ethylhexane-1,3-diol, 2-methyl-2-ethyl-1,3-propanediol, 2-ethyl-2-isobutyl-1,3-propanediol, 2-methyl-1,4-butanediol, 2,2-dimethyl-1,4-butanediol, 2,3-dimethyl-1,4-butanediol, 2-methyl-1,5-pentanediol, 3-methyl-1,5-pentanediol, 2,3-dimethyl-1,5-pentanediol, 3,3-dimethyl-1,5-pentanediol, 2-ethyl-1,3-hexanediol, 2,2,4-trimethyl-1,6-hexanediol, and 2-methyl-1,8-octanediol. These may be used alone or in combination of two or more thereof.

The number of carbon atoms of the aliphatic diol (A2) is preferably 3 to 10, more preferably 4 to 10, still more preferably 5 to 10, particularly preferably 6 to 9.

### (Carboxy group-containing polyol (A3))

The polyol (A) preferably includes, in addition to the aromatic polyester polyol (A1) and the aliphatic diol (A2), a carboxy group-containing polyol (A3). The carboxy group-containing polyol (A3) included can provide a polyurethane resin having an acid value. Note that, in order to provide the acid value, for example, another polyol having an anionic hydrophilic group such as a sulfonic group-containing polyol may be used; however, more preferred is the use of the carboxy group-containing polyol (A3).

The carboxy group-containing polyol (A3) is a polyol intramolecularly having a carboxy group, and examples include carboxylic acid-containing compounds such as dimethylolpropionic acid, 2,2-dimethylolbutyric acid, 2,2-dimethylolvaleric acid, dioxymaleic acid, 2,6-dioxybenzoic acid, and 3,4-diaminobenzoic acid, derivatives of the foregoing, and salts of the foregoing. These may be used alone or in combination of two or more thereof.

The carboxy group used herein is a concept including not only the acid type (-COOH), but also the salt type, namely, the carboxylate group (-COOX where X: cation forming the salt together with the carboxylic acid), and the acid type and the salt type may be used in mixture. The carboxy group is neutralized into a salt, so that the polyurethane resin finally obtained can have dispersibility in water. Thus, in the aqueous dispersion of the polyurethane resin, the carboxy group present is of the salt type. On the other hand, in the coating film obtained by drying the aqueous dispersion, the carboxy group present is of the salt type in the case of using a nonvolatile base as the neutralizer, or the carboxy group present is of the acid type in the case of using a volatile base as the neutralizer. The type of the salt type varies depending on the type of the neutralizer described later, and may be an alkali metal salt such as sodium salt, a tertiary amine salt such as triethylamine salt, or ammonium salt.

### (Trihydric alcohol (A4) having molecular weight of 350 or less)

The polyol (A) preferably includes, in addition to the aromatic polyester polyol (A1) and the aliphatic diol (A2), a trihydric alcohol (A4) having a molecular weight of 350 or less. The trihydric alcohol (A4), which has such a low molecular weight, is included, so that the coating film can have improved heat resistance. The polyol (A) more preferably includes the aromatic polyester polyol (A1), the aliphatic diol (A2), the carboxy group-containing polyol (A3), and the trihydric alcohol (A4).

Examples of the trihydric alcohol (A4) having a molecular weight of 350 or less include trimethylolpropane, glycerol, trimethylolethane, butanetriol, pentanetriol, hexanetriol, and triols obtained by using such a trihydric alcohol as an initiator to cause ring-opening addition of lactone and/or epoxide (such as polycaprolactone triol). These may be used alone or in combination of two or more thereof. The trihydric alcohol (A4) preferably has a molecular weight of 92 to 200, more preferably 100 to 150. Note that the molecular weight of the trihydric alcohol (A4) is, in the case of such a lactone and/or epoxide-adduct triol, the number-average molecular weight (Mn).

### (Amounts of components in polyol (A))

The amount of the aromatic polyester polyol (A1) is not particularly limited, and is, relative to 100 mass% of the polyol (A), preferably 70 to 90 mass%, more preferably 80 to 90 mass%. When the amount of the aromatic polyester polyol (A1) is 70 mass% or more, the effect of improving the storage stability and the coating film strength can be enhanced.

The amount of the aliphatic diol (A2) having a hydrocarbon group in a side chain is not particularly limited, and is, relative to 100 mass% of the polyol (A), preferably 1 to 15 mass%, more preferably 2 to 10 mass%.

The amount of the carboxy group-containing polyol (A3) is not particularly limited, and may be, relative to 100 mass% of the polyol (A), 20 mass% or less, may be 2 to 15 mass%, or may be 3 to 12 mass%.

The amount of the trihydric alcohol (A4) having a molecular weight of 350 or less is not particularly limited and may be, relative to 100 mass% of the polyol (A), 10 mass% or less, may be 0.1 to 5 mass%, or may be 1 to 3 mass%.

For the amounts of the components constituting the polyol (A), 100 mass% of the polyol (A) serving as the basis is calculated such that, when the polyol (A) includes an anionic hydrophilic group such as that of the carboxy group-containing polyol (A3), the anionic hydrophilic group is regarded as being of the acid type. The amount of the carboxy group-containing polyol (A3) is also determined as the amount of the acid type.

### [Polyisocyanate (B)]

The polyisocyanate (B) caused to react with the polyol (A) may be an aliphatic polyisocyanate, an alicyclic polyisocyanate, or an aromatic polyisocyanate. Of these, the alicyclic polyisocyanate is preferably used because coloration of the polyurethane resin is suppressed, and the coating film strength is increased, compared with the case of using the aliphatic polyisocyanate.

Examples of the alicyclic polyisocyanate include isophorone diisocyanate (IPDI), dicyclohexylmethane 4,4'-diisocyanate (hydrogenated MDI), hydrogenated xylylene diisocyanate, 1,4-cyclohexane diisocyanate, methylcyclohexylene diisocyanate, and 1,3-bis(isocyanatomethyl)cyclohexane. These may be used alone or in combination of two or more thereof.

The amount of the polyisocyanate (B), preferably the alicyclic polyisocyanate, is not particularly limited and may be, for example, relative to 100 parts by mass of the total amount of the polyol (A) and the polyisocyanate (B), 10 to 60 parts by mass, may be 20 to 55 parts by mass, or may be 30 to 50 parts by mass.

### [Chain extender (C)]

In the embodiment, the chain extender (C) employed is a compound (C1) having three primary and/or secondary amino groups and not having hydroxy groups, and a compound (C2) having one or more hydroxy groups and two or more primary and/or secondary amino groups. The combined use of the two chain extenders can improve the storage stability of the aqueous dispersion and can improve the heat resistance of the coating film.

The compound (C1) is a compound having three primary amino groups and/or secondary amino groups in a molecule and not having hydroxy groups. The primary amino group (-NH₂) and the secondary amino group (-NHR) are both amino groups having an active hydrogen that reacts with an isocyanato group. The compound (C1) is a trifunctional amine having one or both of the primary amino group and the secondary amino group and having three such groups in total. The number of carbon atoms of the compound (C1) is not particularly limited, but is preferably 3 to 15.

For specific examples of the compound (C1), examples of a compound having two primary amino groups and a secondary amino group in a molecule include diethylenetriamine and iminobisalkylamines such as iminobispropylamine and bis(6-aminohexyl)amine. Examples of a compound having a primary amino group and two secondary amino groups in a molecule include aminoalkylpiperazines such as 2-aminomethylpiperazine. These may be used alone or in combination of two or more thereof.

The compound (C2) is a compound having one or more hydroxy groups and two or more primary amino groups and/or secondary amino groups in a molecule. In other words, the compound (C2) has one or both of a primary amino group and a secondary amino group having an active hydrogen, has two or more of such groups in total, and has one or more hydroxy groups. Of a hydroxy group and an amino group, the amino group reacts faster with an isocyanato group; when the isocyanato group and the amino group are present in equivalent amounts in the reaction, the hydroxy group substantially does not react. Thus, the hydroxy group of the compound (C2) does not react and remains, which imparts a hydroxyl value to the polyurethane resin. The compound (C2) is preferably a compound having a hydroxy group and two primary and/or secondary amino groups. The number of carbon atoms of the compound (C2) is not particularly limited, but is preferably 3 to 10.

For specific examples of the compound (C2), examples of a compound having a hydroxy group, a primary amino group, and a secondary amino group in a molecule include N-(hydroxyalkyl)alkylenediamines such as N-(2-hydroxyethyl)ethylenediamine (synonym: N-(2-aminoethyl)ethanolamine), N-(2-hydroxypropyl)ethylenediamine (synonym: N-(2-aminoethyl)propanolamine), N-(3-hydroxypropyl)ethylenediamine, and N-(2-hydroxyethyl)-1,3-propanediamine (synonym: 3-(2-hydroxyethylamino)propylamine). Examples of a compound having a hydroxy group and two primary amino groups in a molecule include diamino alcohols such as 1,3-diamino-2-propanol. These may be used alone or in combination of two or more thereof.

For the ratio of the compound (C1) and the compound (C2), a mass ratio (C1)/(C2) of the amount of the compound (C1) to the amount of the compound (C2) is preferably 0.3 to 1.4. In this case, the aqueous dispersion can be made to have a low viscosity and the effects of improving the storage stability and the heat resistance of the coating film can be enhanced. The mass ratio (C1)/(C2) is preferably 0.4 to 1.0, more preferably 0.5 to 0.9.

The amount of the chain extender (C) (more preferably the total amount of the compound (C1) and the compound (C2)) is not particularly limited and may be, for example, relative to 100 parts by mass of the total amount of the polyol (A) and the polyisocyanate (B), 0.5 to 15 parts by mass, may be 1 to 10 parts by mass, or may be 2 to 8 parts by mass.

### [Aqueous dispersion of polyurethane resin]

The aqueous dispersion of a polyurethane resin includes a polyurethane resin obtained by a reaction of the polyol (A), the polyisocyanate (B), and the chain extender (C), the polyurethane resin being dispersed in water. More specifically, the aqueous dispersion of the polyurethane resin is obtained by a reaction of the polyol (A) and the polyisocyanate (B) and a reaction of the resultant urethane prepolymer and the chain extender (C).

The polyurethane resin has an acid value of 11.0 to 23.0 mgKOH/g. When the acid value is 11.0 mgKOH/g or more, emulsification dispersibility in water is improved and the aqueous dispersion can have improved storage stability. When the acid value is 23.0 mgKOH/g or less, the aqueous dispersion can have a reduced viscosity and can have improved storage stability. The polyurethane resin more preferably has an acid value of 13.0 to 20.0 mgKOH/g. The acid value of the polyurethane resin can be adjusted by, for example, changing the type and amount of the carboxy group-containing polyol (A3).

In this Description, the acid value can be determined, in accordance with JIS K0070-1992, as the amount of KOH (mg) consumed for neutralizing free carboxy groups contained in 1 g of the solid content of the aqueous dispersion of a polyurethane resin (namely, the polyurethane resin).

The polyurethane resin has a hydroxyl value of 8.0 to 23.0 mgKOH/g. When the hydroxyl value is 8.0 mgKOH/g or more, the affinity for water is improved and the aqueous dispersion can have improved storage stability. When the hydroxyl value is 23.0 mgKOH/g or less, the aqueous dispersion can have a reduced viscosity and improved storage stability and the coating film can have improved heat resistance. The polyurethane resin more preferably has a hydroxyl value of 10.0 to 18.0 mgKOH/g. The hydroxyl value of the polyurethane resin can be adjusted by, for example, changing the type and amount of the compound (C2).

In this Description, the hydroxyl value is measured in accordance with the method A in JIS K1557-1:2007.

The number-average molecular weight (Mn) of the polyurethane resin is not particularly limited and may be, for example, 10,000 or more, or may be 50,000 or more. The average particle size of the aqueous dispersion of the polyurethane resin is not particularly limited and may be, for example, 0.005 to 0.5 µm. The average particle size is a particle size corresponding to a cumulative value of 50% (d50) measured using "Microtrac UPA-UZ152" manufactured by NIKKISO CO., LTD.

The method for producing the aqueous dispersion of a polyurethane resin is not particularly limited, but may be, for example, a method of causing a reaction of the polyol (A) and the polyisocyanate (B) to obtain a urethane prepolymer, neutralizing the urethane prepolymer using a neutralizer, emulsifying and dispersing the urethane prepolymer in water, and subsequently causing a reaction of the urethane prepolymer and the chain extender (C).

Specifically, the polyol (A) and the polyisocyanate (B) are caused to react solventless or in an organic solvent not having active hydrogen groups to synthesize an isocyanate-terminated urethane prepolymer. In this case, the polyisocyanate (B) is used such that the amount of the isocyanato groups is stoichiometrically excessive relative to the amount of the active hydrogen groups included in the polyol (A), for example, in an equivalent ratio of isocyanato groups to active hydrogen groups of 1:0.85 to 0.99. After the synthesis of the urethane prepolymer, anionic hydrophilic groups such as carboxy groups are neutralized using a neutralizer and subsequently the urethane prepolymer is emulsified and dispersed in water. Subsequently, the chain extender (C) is added in an equivalent amount smaller than that of the remaining isocyanato groups (for example, in an equivalent ratio of the isocyanato groups to the active hydrogen group of the chain extender (C), 1:0.50 to 0.95), to cause an interfacial polymerization reaction of isocyanato groups within the emulsification micelles and the chain extender (C) to form urea bonds. This causes an increase in the crosslinking density within the emulsification micelles to form a three-dimensional crosslinking structure. Subsequently, the solvent having been used is removed as needed, to thereby obtain the aqueous dispersion of the polyurethane resin.

Examples of the neutralizer include nonvolatile bases such as sodium hydroxide and potassium hydroxide, tertiary amines such as trimethylamine, triethylamine, dimethylethanolamine, methyldiethanolamine, and triethanolamine, and volatile bases such as ammonia. The neutralization can be performed before the urethane-forming reaction, during the reaction, or after the reaction.

The organic solvent optionally used in the synthesis of the urethane prepolymer may be an organic solvent that is inactive to isocyanato groups and that can dissolve the generated urethane prepolymer. Examples of the organic solvent include dioxane, methyl ethyl ketone, acetone, dimethylformamide, tetrahydrofuran, N-methyl-2-pyrrolidone, toluene, and propylene glycol monomethyl ether acetate.

The aqueous dispersion of a polyurethane resin, which includes water and the polyurethane resin dispersed in water, may include another component unless advantages of the aqueous dispersion of a polyurethane resin are impaired. In the aqueous dispersion, the concentration of the polyurethane resin is not particularly limited and may be, for example, 10 to 50 mass%, may be 20 to 45 mass%, or may be 30 to 40 mass%.

### [Aqueous coating material]

An aqueous coating material according to an embodiment includes the aqueous dispersion of a polyurethane resin, and hence includes water and the polyurethane resin dispersed in water. In the aqueous coating material, another aqueous resin ordinarily used as a film-forming component of aqueous coating materials may be used in combination with the polyurethane resin. Examples of the other aqueous resin include water-soluble or water-dispersible acrylic resins, water-soluble or water-dispersible polyester-based resins, water-soluble or water-dispersible alkyd-based resins, and water-soluble or water-dispersible cellulose-based resins.

In the aqueous coating material, the content of the polyurethane resin is not particularly limited and may be, relative to 100 mass% of the total resin solid content in the aqueous coating material, 20 to 100 mass%, or may be 50 to 100 mass%.

To the aqueous coating material, unless its advantages are impaired, various additives ordinarily added to aqueous coating materials can be added. Examples of the additives include pigments, ultraviolet absorbents, light stabilizers, surface control agents, inorganic fillers, organic fillers, dispersing aids, antiseptics, anticorrosives, antioxidants, silane coupling agents, defoaming agents, viscosity modifiers, antistatic agents, crosslinking agents, and organic solvents.

### EXAMPLES

Hereinafter, the present invention will be described further in detail on the basis of Examples and Comparative Examples; however, the present invention is not limited to these.

Details of components used in EXAMPLES are as follows.

### [(A1) component]

### ·Aromatic polyester polyol (1):

A reaction vessel equipped with a stirrer, a thermometer, a reflux condenser, an addition tank, and a nitrogen gas inlet tube was charged with 47.74 parts by mass of terephthalic acid, 12.45 parts by mass of adipic acid, 33.26 parts by mass of neopentyl glycol, and 6.55 parts by mass of ethylene glycol, and heated to 250°C under a stream of nitrogen and under stirring. The reaction was continued until the acid value reached 5 mgKOH/g or less; subsequently, the pressure was gradually reduced, and a deglycolation reaction was caused at 1 mmHg for 5 hours to obtain an aromatic polyester polyol (1) having a number-average molecular weight of 1780.

### ·Aromatic polyester polyol (2):

A reaction vessel equipped with a stirrer, a thermometer, a reflux condenser, an addition tank, and a nitrogen gas inlet tube was charged with 32.81 parts by mass of isophthalic acid, 23.60 parts by mass of adipic acid, 38.02 parts by mass of 1,6-hexanediol, and 5.57 parts by mass of ethylene glycol, and heated to 250°C under a stream of nitrogen and under stirring. The reaction was continued until the acid value reached 5 mgKOH/g or less; subsequently, the pressure was gradually reduced, and a deglycolation reaction was caused at 1 mmHg for 5 hours to obtain an aromatic polyester polyol (2) having a number-average molecular weight of 1780.

### ·Aromatic polyester polyol (3):

A reaction vessel equipped with a stirrer, a thermometer, a reflux condenser, an addition tank, and a nitrogen gas inlet tube was charged with 18.01 parts by mass of terephthalic acid, 18.01 parts by mass of isophthalic acid, 23.40 parts by mass of adipic acid, 34.48 parts by mass of neopentyl glycol, and 6.09 parts by mass of ethylene glycol, and heated to 250°C under a stream of nitrogen and under stirring. The reaction was continued until the acid value reached 5 mgKOH/g or less; subsequently, the pressure was gradually reduced, and a deglycolation reaction was caused at 1 mmHg for 5 hours to obtain an aromatic polyester polyol (3) having a number-average molecular weight of 1780.

### ·Aliphatic polyester polyol (4):

A reaction vessel equipped with a stirrer, a thermometer, a reflux condenser, an addition tank, and a nitrogen gas inlet tube was charged with 55.20 parts by mass of adipic acid and 44.80 parts by mass of 3-methyl-1,5-pentanediol, and heated to 250°C under a stream of nitrogen and under stirring. The reaction was continued until the acid value reached 5 mgKOH/g or less; subsequently, the pressure was gradually reduced, and a deglycolation reaction was caused at 1 mmHg for 5 hours to obtain an aliphatic polyester polyol (4) having a number-average molecular weight of 1780.
[(A2) component]
   ·MPD: manufactured by KURARAY CO., LTD., 3-methyl-1,5-pentanediol
   ·BEPG: manufactured by KH Neochem Co., Ltd., 2-butyl-2-ethyl-1,3-propanediol
[(A3) component]
   ·Dimethylolpropionic acid
   ·2,2-Dimethylolbutyric acid
[(A4) component]
   ·Trimethylolpropane (molecular weight: 134.17)
   ·Polycaprolactone triol: "PLACCEL 303" (Mn: 300) manufactured by Daicel Corporation
[(B) component]
   ·Hydrogenated MDI: dicyclohexylmethane 4,4'-diisocyanate
   ·IPDI: isophorone diisocyanate
[(C1) component]
   ·Diethylenetriamine
[(C2) component]
   ·Amino alcohol (1): "Amino alcohol EA" manufactured by Nippon Nyukazai Co., Ltd., N-(2-hydroxyethyl)ethylenediamine
   ·Amino alcohol (2): "Amino alcohol PA" manufactured by Nippon Nyukazai Co., Ltd., N-(2-hydroxypropyl)ethylenediamine

### <Synthesis of aqueous dispersion of polyurethane resin>

### [Example 1]

To a four-neck flask equipped with a stirrer, a reflux condenser, a thermometer, and a nitrogen inlet tube, 52.24 parts by mass of the aromatic polyester polyol (1), 0.75 parts by mass of trimethylolpropane, 2.64 parts by mass of MPD, 4.32 parts by mass of dimethylolpropionic acid, and 30 parts by mass of methyl ethyl ketone were added and sufficiently stirred and dissolved; subsequently, 40.05 parts by mass of hydrogenated MDI was added and a reaction was caused at 75°C until the content of free isocyanato groups relative to the solid content reached 5.46 mass%, to obtain a methyl ethyl ketone solution of a urethane prepolymer. This prepolymer solution was cooled to 45°C; 1.96 parts by mass of triethylamine was added to achieve neutralization; subsequently, while a homogenizer was used to perform stirring, 163 parts by mass of distilled water was added to cause emulsification and dispersion. Subsequently, an aqueous solution prepared by diluting 2.09 parts by mass of diethylenetriamine and 2.81 parts by mass of amino alcohol (1) with 49 parts by mass of water was added, and a chain extension reaction was performed at 20°C for 1 hour. While this was heated under a reduced pressure, methyl ethyl ketone was distilled off, to obtain an aqueous dispersion of a polyurethane resin having a solid content of 38 mass%. The obtained polyurethane resin was found to have an acid value of 17.2 mgKOH/g and a hydroxyl value of 14.4 mgKOH/g.

### [Examples 2 to 16 and Comparative Examples 1 to 8]

The same synthesis as in Example 1 was performed except that the types and charging amounts of raw materials were changed as described in Tables 1 to 3 below, to obtain aqueous dispersions of polyurethane resins. In Tables 1 to 3, for mixing ratios, "(A1)/(A) [mass%]" is the ratio of the amount of the aromatic polyester polyol (A1) relative to 100 mass% of the polyol (A). "(A2)/(A) [mass%] " is the ratio of the amount of the aliphatic diol (A2) relative to 100 mass% of the polyol (A). "(C1)/(C2)" is the mass ratio of the compound (C1) to the compound (C2).

### <Evaluation of aqueous dispersions of polyurethane resins>

Each of the aqueous dispersions of polyurethane resins was measured and evaluated in terms of viscosity, storage stability, heat resistance, and tensile strength. The evaluation methods are as follows.

### [Viscosity]

The aqueous dispersion of a polyurethane resin immediately after its synthesis was measured for viscosity at a solid content of 38 mass%, using a single cylinder-type rotational viscometer (JIS Z-8803:2011) at 20°C. The viscosity is preferably 500 mPa·s or less.

### [Storage stability]

The aqueous dispersion of a polyurethane resin having a solid content of 38 mass% was stored at 35°C for 12 months and measured for viscosity before the storage and after the storage; the change in the viscosity was used for evaluating the storage stability. The method for measuring the viscosity is as described above. For the evaluation, examples having a viscosity change before and after the storage of less than 50 mPa·s were evaluated as having high storage stability and described as "Excellent"; examples having a viscosity change of 50 mPa·s or more and less than 200 mPa·s were described as "Good"; examples having a viscosity change of 200 mPa·s or more or having turned into gel after the storage were evaluated as having poor storage stability and described as "Poor".

### [Heat resistance]

The aqueous dispersion of a polyurethane resin was applied onto a vat coated with TEFLON (registered trademark) such that the dry film thickness would be 300 µm, dried at 40°C for 15 hours, subsequently dried at 80°C for 6 hours, and further dried at 120°C for 30 minutes to obtain a film formed of the polyurethane resin. The obtained film was subjected to a heat resistance test at 180°C for 1 hour. The film before and after the heat resistance test was subjected to dynamic viscoelasticity measurement (measurement mode: temperature-dependent measurement) in the tensile mode to determine storage modulus E' at 50°C. The dynamic viscoelasticity measurement was performed at a heating rate of 3°C/min, at a frequency of 10 Hz, at an initial strain of 0.02%, and at a dynamic strain of 0.02%. For a pre-heat resistance test and post-heat resistance test storage modulus E' ratio (post-test log₁₀E'/pre-test log₁₀E'), examples in which the ratio was 0.95 or more were evaluated as having high heat resistance and described as "Excellent"; examples in which the ratio was 0.93 or more and less than 0.95 were described as "Good"; examples in which the ratio was less than 0.93 were evaluated as having poor heat resistance and described as "Poor".

### [Tensile strength]

Films produced as in the evaluation of heat resistance were measured, in accordance with JIS A6021:2011, using a tensile tester, for tensile strength (tensile strength). The tensile strength is preferably 25 MPa or more.

**[Table 1]**

| | | Example | | | | | | | |
|---|---|---|---|---|---|---|---|---|---|
| | | 1 | 2 | 3 | 4 | 5 | 6 | 7 | 8 |
| Composition (parts by mass) | | | | | | | | | |
| | Aromatic polyester polyol (1) | 52.24 | | | 53.54 | 52.74 | 57.54 | 52.2 | 55.24 |
| | Aromatic polyester polyol (2) | | 52.24 | | | | | | |
| | Aromatic polyester polyol (3) | | | 52.24 | | | | | |
| | Aliphatic polyester polyol (4) | | | | | | | | |
| Polyol | Trimethylolpropane | 0.75 | 0.75 | 0.75 | 0.75 | 0.75 | 0.75 | 0.75 | 0.75 |
| | Polycaprolactone triol | | | | | | | | |
| | MPD | 2.64 | 2.64 | 2.64 | | 2.64 | 2.64 | 2.64 | 1.5 |
| | BEPG | | | | 2.64 | | | | |
| | Dimethylolpropionic acid | 4.32 | 4.32 | 4.32 | 4.32 | | 4.32 | 4.32 | 4.32 |
| | 2,2-Dimethylolbutyric acid | | | | | 4.32 | | | |
| Isocyanate | Hydrogenated MDI | 40.05 | 40.05 | 40.05 | 38.75 | 39.55 | | 40.05 | 38.19 |
| | IPDI | | | | | | 34.75 | | |
| Total of polyol and isocyanate | | 100 | 100 | 100 | 100 | 100 | 100 | 99.96 | 100 |
| Chain extender | Diethylenetriamine | 2.09 | 2.09 | 2.09 | 2.09 | 2.09 | 2.09 | 2.03 | 2.09 |
| | Amino alcohol (1) | 2.81 | 2.81 | 2.81 | 2.81 | 2.81 | 2.81 | | 2.81 |
| | Amino alcohol (2) | | | | | | | 3.19 | |
| Total | | 104.9 | 104.9 | 104.9 | 104.9 | 104.9 | 104.9 | 105.2 | 104.9 |
| Neutralizer | Triethylamine (parts by mass) | 1.96 | 1.96 | 1.96 | 1.96 | 1.77 | 1.96 | 1.96 | 1.96 |
| Mixing ratio | (A1)/(A) [mass%] | 87.1 | 87.1 | 87.1 | 87.4 | 87.3 | 88.2 | 87.1 | 89.4 |
| | (A2)/(A) [mass%] | 4.4 | 4.4 | 4.4 | 4.3 | 4.4 | 4.0 | 4.4 | 2.4 |
| | (C1)/(C2) | 0.74 | 0.74 | 0.74 | 0.74 | 0.74 | 0.74 | 0.64 | 0.74 |
| Acid value of polyurethane resin [mgKOH/g] | | 17.2 | 17.2 | 17.2 | 17.2 | 15.6 | 17.2 | 17.2 | 17.2 |
| Hydroxyl value of polyurethane resin [mgKOH/g] | | 14.4 | 14.4 | 14.4 | 14.4 | 14.4 | 14.4 | 14.4 | 14.4 |
| Evaluation | Viscosity [mPa·s] | 25 | 30 | 30 | 30 | 40 | 35 | 30 | 150 |
| | Heat resistance | Excellent | Good | Excellent | Excellent | Excellent | Good | Excellent | Excellent |
| | Storage stability | Excellent | Excellent | Good | Excellent | Excellent | Excellent | Excellent | Good |
| | Tensile strength [MPa] | 32 | 33 | 31 | 30 | 32 | 28 | 30 | 34 |

**[Table 2]**

| | | Example | | | | | | | |
|---|---|---|---|---|---|---|---|---|---|
| | | 9 | 10 | 11 | 12 | 13 | 14 | 15 | 16 |
| Composition (parts by mass) | | | | | | | | | |
| | Aromatic polyester polyol (1) | 48.43 | 49.11 | 55.54 | 45.29 | 57.24 | 52.2 | 52.2 | 51.29 |
| | Aromatic polyester polyol (2) | | | | | | | | |
| | Aromatic polyester polyol (3) | | | | | | | | |
| | Aliphatic polyester polyol (4) | | | | | | | | |
| Polyol | Trimethylolpropane | 0.75 | 0.75 | 0.75 | 0.75 | 0.75 | 0.75 | 0.75 | |
| | Polycaprolactone triol | | | | | | | | 1.70 |
| | MPD | 4 | 2.64 | 2.64 | 2.64 | 2.64 | 2.64 | 2.64 | 2.64 |
| | BEPG | | | | | | | | |
| | Dimethylolpropionic acid | 4.32 | 5.5 | 3 | 4.32 | 4.32 | 4.32 | 4.32 | 4.32 |
| | 2,2-Dimethylolbutyric acid | | | | | | | | |
| Isocyanate | Hydrogenated MDI | 42.5 | 42 | 38.07 | 47 | 35.05 | 40.1 | 40.1 | 40.05 |
| | IPDI | | | | | | | | |
| Total of polyol and isocyanate | | 100 | 100 | 100 | 100 | 100 | 100 | 100 | 100 |
| Chain extender | Diethylenetriamine | 2.09 | 2.09 | 2.09 | 3.22 | 1.32 | 2.63 | 1.33 | 2.09 |
| | Amino alcohol (1) | 2.81 | 2.81 | 2.81 | 4.32 | 1.77 | 1.99 | 3.99 | 2.81 |
| | Amino alcohol (2) | | | | | | | | |
| Total | | 104.9 | 104.9 | 104.9 | 107.5 | 103.1 | 104.6 | 105.3 | 104.9 |
| Neutralizer | Triethylamine (parts by mass) | 1.96 | | 2.49 1.36 1.96 | | 1.96 | 1.96 | 1.96 | 1.96 |
| Mixing ratio | (A1)/(A) [mass%] | 84.2 | 84.7 | 89.7 | 85.5 | 88.1 | 87.1 | 87.1 | 85.6 |
| | (A2)/(A) [mass%] | 7.0 | 4.6 | 4.3 | 5.0 | 4.1 | 4.4 | 4.4 | 4.4 |
| | (C1)/(C2) | 0.74 | 0.74 | 0.74 | 0.75 | 0.75 | 1.32 | 0.33 | 0.74 |
| Acid value of polyurethane resin [mgKOH/g] | | 17.2 | 21.9 | 12.0 | 16.8 | 17.5 | 17.3 | 17.2 | 17.2 |
| Hydroxyl value of polyurethane resin [mgKOH/g] | | 14.4 | 14.4 | 14.4 | 21.6 | 9.3 | 10.3 | 20.4 | 14.4 |
| Evaluation | Viscosity [mPa·s] | 35 | 350 | 30 | 300 | 30 | 35 | 330 | 30 |
| | Heat resistance | Good | Good | Good | Good | Excellent | Excellent | Good | Excellent |
| | Storage stability | Excellent | Good | Good | Good | Good | Good | Good | Good |
| | Tensile strength [MPa] | 29 | 35 | 30 | 29 | 30 | 35 | 29 | 29 |

**[Table 3]**

| | | Comparative Example | | | | | | | |
|---|---|---|---|---|---|---|---|---|---|
| | | 1 | 2 | 3 | 4 | 5 | 6 | 7 | 8 |
| Composition (parts by mass) | | | | | | | | | |
| | Aromatic polyester polyol (1) | 59.53 | 52.24 | 52.24 | 43.55 | 57.65 | 42.24 | 59.29 | |
| | Aromatic polyester polyol (2) | | | | | | | | |
| | Aromatic polyester polyol (3) | | | | | | | | |
| | Aliphatic polyester polyol (4) | | | | | | | | 52.24 |
| Polyol | Trimethylolpropane | 0.75 | 0.75 | 0.75 | 0.75 | 0.75 | 0.75 | 0.75 | 0.75 |
| | Polycaprolactone triol | | | | | | | | |
| | MPD | | 2.64 | 2.64 | 2.64 | 2.64 | 2.64 | 2.64 | 2.64 |
| | BEPG | | | | | | | | |
| | Dimethylolpropionic acid | 4.32 | 4.32 | 4.32 | 6.48 | 2.16 | 4.32 | 4.32 | 4.32 |
| | 2,2-Dimethylolbutyric acid | | | | | | | | |
| Isocyanate | Hydrogenated MDI | 35.4 | 40.05 | 40.05 | 46.58 | 36.8 | 50.05 | 33 | 40.05 |
| | IPDI | | | | | | | | |
| Total of polyol and isocyanate | | 100 | 100 | 100 | 100 | 100 | 100 | 100 | 100 |
| Chain extender | Diethylenetriamine | 2.09 | | 2.09 | 2.09 | 2.09 | 3.7 | 0.99 | 2.09 |
| | Amino alcohol (1) | 2.81 | 2.81 | | 2.81 | 2.81 | 4.97 | 1.33 | 2.81 |
| | Amino alcohol (2) | | | | | | | | |
| Total | | 104.9 | 102.8 | 102.1 | 104.9 | 104.9 | 108.7 | 102.3 | 104.9 |
| Neutralizer | Triethylamine (parts by mass) | 1.96 | 1.96 | 1.96 | 2.93 | 0.98 | 1.96 | 1.96 | 1.96 |
| Mixing ratio | (A1)/(A) [mass%] | 92.2 | 87.1 | 87.1 | 81.5 | 91.2 | 84.6 | 88.5 | 87.1 |
| | (A2)/(A) [mass%] | 0 | 4.4 | 4.4 | 4.9 | 4.2 | 5.3 | 3.9 | 4.4 |
| | (C1)/(C2) | 0.74 | 0 | - | 0.74 | 0.74 | 0.74 | 0.74 | 0.74 |
| Acid value of polyurethane resin [mgKOH/g] | | 17.2 | 17.6 | 17.7 | 25.8 | 8.6 | 16.6 | 17.7 | 17.2 |
| Hydroxyl value of polyurethane resin [mgKOH/g] | | 14.4 | 14.7 | 0 | 14.4 | 14.4 | 24.6 | 7 | 14.4 |
| Evaluation | Viscosity [mPa·s] | 700 | 600 | 40 | 1500 | 35 | 1000 | 35 | 380 |
| | Heat resistance | Excellent | Poor | Poor | Good | Good | Poor | Excellent | Good |
| | Storage stability | Poor | Poor | Good | Poor | Poor | Poor | Poor | Poor |
| | Tensile strength [MPa] | 35 | 26 | 30 | 35 | 28 | 35 | 30 | 23 |

The results are described in Tables 1 to 3. In Comparative Example 1 in which the aliphatic diol (A2) was not used, the aqueous dispersion had high viscosity and poor storage stability. In Comparative Example 2 in which the compound (C1) was not used as the chain extender, the aqueous dispersion had high viscosity, and the storage stability and the heat resistance of the film were poor. In Comparative Example 3 in which the compound (C2) was not used as the chain extender, the heat resistance of the film was poor.

In Comparative Examples 4 to 7, the aromatic polyester polyol (A1) and the aliphatic diol (A2) were used as the polyol and the compound (C1) and the compound (C2) were used in combination as the chain extender. However, in Comparative Example 4, the acid value was higher than the specified range, so that the aqueous dispersion had high viscosity and poor storage stability. In Comparative Example 5, the acid value was lower than the specified range and the aqueous dispersion had poor storage stability. In Comparative Example 6, the hydroxyl value was higher than the specified range, so that the aqueous dispersion had high viscosity, and the storage stability and the heat resistance of the film were poor. In Comparative Example 7, the hydroxyl value was lower than the specified range, and the aqueous dispersion had poor storage stability.

On the other hand, in Comparative Example 8 in which, instead of the aromatic polyester polyol (A1), the aliphatic polyester polyol was used, the aqueous dispersion had poor storage stability and the film had low tensile strength.

By contrast, in Examples 1 to 16, the aqueous dispersions of polyurethane resins had low viscosity and good storage stability. The films formed from the aqueous dispersions had good heat resistance and high tensile strength.

Note that, for various numerical ranges described in the Description, the upper limit values and the lower limit values can be appropriately combined, and all such combinations are regarded as being described as preferred numerical ranges in the Description. The numerical ranges described in the form of "X to Y" mean X or more and Y or less.

Some embodiments of the present invention have been described so far. These embodiments are described as examples and are not intended to limit the scope of the invention. These embodiments can also be carried out in various other forms and various omissions, replacements, and changes can be performed without departing from the spirit and scope of the invention. These embodiments and their omissions, replacements, changes, and the like are included in the scope and spirit of the invention and similarly included in the invention described in Claims and the range of equivalents.

## Claims

1. An aqueous dispersion of a polyurethane resin obtained by a reaction of a polyol (A), a polyisocyanate (B), and a chain extender (C),
wherein the polyol (A) includes an aromatic polyester polyol (A1) and an aliphatic diol (A2) having a hydrocarbon group in a side chain,
the chain extender (C) includes a compound (C1) having three primary and/or secondary amino groups and not having hydroxy groups, and a compound (C2) having one or more hydroxy groups and two or more primary and/or secondary amino groups, and
the polyurethane resin has an acid value of 11.0 to 23.0 mgKOH/g and a hydroxyl value of 8.0 to 23.0 mgKOH/g.

2. The aqueous dispersion of a polyurethane resin according to claim 1, wherein a mass ratio (C1)/(C2) of the compound (C1) to the compound (C2) is 0.3 to 1.4.

3. The aqueous dispersion of a polyurethane resin according to claim 1, wherein the aliphatic diol (A2) has 3 to 10 carbon atoms.

4. The aqueous dispersion of a polyurethane resin according to claim 1, wherein the polyisocyanate (B) includes an alicyclic polyisocyanate.

5. The aqueous dispersion of a polyurethane resin according to claim 1, wherein an amount of the aromatic polyester polyol (A1) relative to 100 mass% of the polyol (A) is 70 to 90 mass%.

6. The aqueous dispersion of a polyurethane resin according to claim 1, wherein the polyol (A) further includes a carboxy group-containing polyol (A3).

7. The aqueous dispersion of a polyurethane resin according to claim 1, wherein the polyol (A) further includes a trihydric alcohol (A4) having a molecular weight of 350 or less.

8. An aqueous coating material comprising the aqueous dispersion of a polyurethane resin according to any one of claims 1 to 7.
